**Europäisches Patentamt**

**European Patent Office**

**Office européen des brevets**

(11) Veröffentlichungsnummer: **0 231 904 B1**

(12) **EUROPÄISCHE PATENTSCHRIFT**

(45) Veröffentlichungstag der Patentschrift: **15.05.91**

(51) Int. Cl.⁵: **A23D 9/00, A23C 11/04**

(21) Anmeldenummer: **87101310.8**

(22) Anmeldetag: **30.01.87**

(54) **Neue Polyensäure-reiche Fettmischung und deren Verwendung bei der Herstellung von Säuglingsnahrungen.**

(30) Priorität: **31.01.86 DE 3603000**

(43) Veröffentlichungstag der Anmeldung:
**12.08.87 Patentblatt 87/33**

(45) Bekanntmachung des Hinweises auf die
Patenterteilung:
**15.05.91 Patentblatt 91/20**

(84) Benannte Vertragsstaaten:
**AT BE CH DE ES FR GB GR IT LI LU NL SE**

(56) Entgegenhaltungen:
**EP-A- 0 140 805**
**EP-A- 0 148 303**

(73) Patentinhaber: **MILUPA AKTIENGESELL-
SCHAFT**
**Bahnstrasse 14-30**
**W-6382 Friedrichsdorf/Taunus(DE)**

(72) Erfinder: **Schweikhardt, Friedrich, Dr.**
**Falkenweg 1**
**W-6382 Friedrichsdorf 2(DE)**
Erfinder: **Harzer, Gernd, Dr.**
**Im Rosengärtchen 144**
**W-6370 Oberursel(DE)**
Erfinder: **Haug, Martin, Dr.**
**Am Salzpfad 17c**
**W-6382 Friedrichsdorf(DE)**

(74) Vertreter: **Brauns, Hans-Adolf, Dr. rer. nat. et
al**
**Hoffmann, Eitle & Partner, Patentanwälte**
**Arabellastrasse 4**
**W-8000 München 81(DE)**

**Beschreibung**

Die Erfindung betrifft eine Fettmischung mit einem hohen Gehalt an ungesättigten Polyenfettsäuren und Cholesterin mit einem Verhältnis von Docosahexaen- zu Arachidonsäure von 1:2,0 bis 1:3,0, die bislang nicht für die menschliche Ernährung zur Verfügung stand. Sie betrifft weiterhin ein Verfahren zu deren Herstellung sowie deren Verwendung bei der Zubereitung einer Säuglingsnahrung.

Herkömmliche Säuglingsnahrungen enthalten maximal 0,1 Gew.% Arachidon- und 0,05 Gew.% Docosahexaensäure, sowie maximal 10 mg Cholesterin pro 100 ml. Da bekannt ist, daß der wachsende Organismus zur Synthese neuen Zellwandmaterials, insbesondere bei der Entwicklung des Gehirns, große Mengen dieser Substanzen (Cholesterin, Arachidonsäure, Docosahexaensäure) in einem bestimmten Verhältnis zueinander benötigt, wird in Frage gestellt, ob herkömmliche Säuglingsmilchnahrungen in jedem Fall optimal sind.

Hoch ungesättigte Polyenfettsäuren werden im menschlichen Organismus durch Kettenverlängerung und Desaturierung aus den essentiellen Fettsäuren Linol- und Linolensäure synthetisiert. Diese Eigensynthese der hoch ungesättigten Polyenfettsäuren ist beim rasch wachsenden Organismus des Säuglings jedoch noch stark eingeschränkt. Daher ist das Neugeborene - insbesondere das Frühgeborene - auf die exogene Zufuhr von hoch ungesättigten Polyenfettsäuren wie z.B. Arachidon- und Docosahexaensäure angewiesen. Eine unzureichende Versorgung mit hoch ungesättigten Polyenfettsäuren führt beim Säugling dazu, daß andere verfügbare Fettsäuren wie z.B. Öl- oder Linolsäure in die Lipide der Zellmembranen eingebaut werden. Dies kann Veränderungen der Eigenschaften der Zellmembran hervorrufen, die zu verminderter Membranstabilität, Fluidität und einer veränderten Aktivität membrangebundener Enzyme führen können.

Auch der Cholesteringehalt der Säuglingsnahrung ist neben dem Vorhandensein der hoch ungesättigten Polyenfettsäuren von Bedeutung für die Entwicklung des Säuglings. Cholesterin ist ein Bestandteil der Zellmembranen und damit wie die hoch ungesättigten Polyenfettsäuren von Bedeutung für deren physio-chemische Eigenschaften. Aufgrund des raschen Zellwachstums in der Neonatalphase wird während dieses Zeitraums ein erhöhter Bedarf an Cholesterin angenommen. Exogen zugeführtes Cholesterin ist zudem von Bedeutung für die Reifung des Lipidstoffwechsels.

Aufgabe der Erfindung ist es, eine Fettmischung zur Verfügung zu stellen, die im Gegensatz zu üblichen für Säuglingsmilchnahrungen verwendeten Fettmischungen größere Mengen der physiologisch wichtigen hoch ungesättigten Polyenfettsäuren und Cholesterin enthalten. Verbunden mit dieser Aufgabe ist es unter Einsatz dieser Fettmischung gelungen, eine Säuglingsnahrung herzustellen, die im Gegensatz zu herkömmlichen Formelnahrungen größere Mengen oben genannter Fettsäuren und Cholesterin enthält.

Überraschenderweise wurde festgestellt, daß es bei Verwendung einer Formelnahrung mit den in der vorliegenden Anmeldung beanspruchten Fettsäuregehalten und -verhältnissen zur Ausbildung eines Lipid- und Fettsäuremusters im Blut der Säuglinge kommt, das dem der muttermilchernährten Kinder entspricht. Eine Ernährung mit einer konventionellen Formelnahrung weist dagegen signifikante Unterschiede auf, die auf einen Mangel an langkettig-hochungesättigten Fettsäuren schließen lassen.

Der Stand der Technik gemäß EP-A-0 140 805 sieht eine Ergänzung einer Formelnahrung mit Nukleosiden vor, um ein der Fütterung mit Frauenmilch entsprechendes Lipidspektrum im Blut der Säuglinge zu erreichen. Im Gegensatz zu den dortigen Feststellungen hat die Anmelderin gefunden, daß überraschenderweise eine Supplementierung mit Nukleosiden nicht erforderlich ist, da allein die Ergänzung einer Formelnahrung mit Arachidon- und Docosahexaensäure in den beanspruchten Verhältnissen zu den angesprochenen Effekten führt.

Die Erfindung betrifft eine Fettmischung für Säuglingsnahrungen, die dadurch gekennzeichnet ist, daß sie die hoch ungesättigten Fettsäuren Arachidon- und Docosahexaensäure aus Fetten tierischen oder pflanzlichen Ursprungs in einem Verhältnis der Docosahexaen- zur Arachidonsäure von 1 : 2,0 bis 1 : 3,0 enthält, wobei der Gehalt an Arachidonsäure in der Fettmischung 0,12 bis 1,0 Gew.% und der an Docosahexaensäure 0,05 bis 0,5 Gew.% bei einem Gesamtgehalt an beiden Säuren von 0,17 bis 1,5 Gew.% beträgt.

Die erfindungsgemäße Fettmischung enthält vorzugsweise einen Gehalt an Arachidonsäure von 0,12 bis 1,0 Gew.% und an Docosahexaensäure von 0,05 bis 0,5 Gew.%, wobei der Gesamtgehalt an beiden Säuren im Bereich von 0,17 bis 1,5 Gew.% liegt. Weiterhin ist in der erfindungsgemäßen Fettmischung Cholesterin aus Fetten tierischen oder pflanzlichen Ursprungs vorzugsweise in einer Menge von 3 bis 20 mg/g Fett enthalten.

Die erfindungsgemäße Fettmischung, enthaltend die vorgenannten ungesättigten Fettsäuren und Cholesterin, erhält man durch Computer-optimiertes Mischen tierischer und pflanzlicher Fette, wobei als Grundlage vor allem Fette dicotyler und monocotyler Pflanzen, die ausreichend Öl-, Linol- und Linolensäure haben,

EP 0 231 904 B1

Verwendung finden. Die gleichzeitige Verwendung von Milchfett erlaubt eine begrenzte Anhebung des Cholesterins. Das Einbringen von Arachidonsäure und Docosahexaensäure gelingt nur durch die Verwendung von Fetten aus Algen (Laminaria-, Fucus-, Phaeophyta, Rhodophyta-Arten), Fischölen, insbesondere Herings-, Dorsch-, Hai-, Makrele, Rotbarschöle und Fischleberölen. Eine wichtige Quelle für die genannten Fettsäuren, vor allem auch für Cholesterin, sind ferner Organfette aus Rindern und Schweinen. Ferner eignen sich hoch raffinierte und desodorierte Eieröle und Eilecithinfraktionen.

Die erfindungsgemäße Fettmischung kann somit erhalten werden, indem man folgende Fette verwendet:

- Fischöle aus Dorsch, Hai, Hering, Makrele, Rotbarsch sowie entsprechende Fischleberöle
- Eieröl, Eilecithin
- Rinderleber- bzw. -nierenfett, Schweineleber- bzw. -nierenfett, Rinderhirnfett, Schweinehirnfett
- Pflanzenöle (Palmöl, Sojaöl, Baumwollsaatöl, Kokosfett, Maiskeimöl, Sonnenblumenöl, Palmkernfett)
- Oleo Oil ( Rinderfettfraktion)
- Algenöle (Laminaria-, Fucus-, Phaeophyta-, Rhodophyta).

Die Erstellung der Fettmischungen setzt voraus daß zuvor eine detaillierte Analyse der Fettsäuren, des Cholesterins und der Phospholipide in den genannten Ausgangsfetten vorgenommen wird. Die Analysen der Lipide können mittels Kapillar-Gaschromatographie und/oder Hochdruckflüssigkeitschromatographie durchgeführt werden. Aus den entsprechenden analytischen Daten kann man dann, unter Verwendung eines geeigneten Computerprogramms, eine optimale Mischung der Ausgangsfette mit den unter Ansprüchen 1 und 2 genannten Kennzahlen berechnen.

Gemäß einer vorteilhaften Ausführungsform stabilisiert man die erfindungsgemäße Fettmischung mit alpha-Tocopherol. Tocopherol ist dabei vorzugsweise in einer Menge von 150 bis 300 ppm bezogen auf die Fettmischung vorhanden.

Weiterhin ist es vorteilhaft zur Stabilisierung Ascorbylpalmitat zu verwenden, das allein oder zusätzlich zu alpha-Tocopherol angewendet werden kann, wobei die angewendete Menge vorzugsweise im Bereich von 150 bis 300 ppm bezogen auf die Fettmischung liegt.

Bei der Herstellung der erfindungsgemäßen Fettmischung gemäß dem nachfolgenden Fettmischungsbeispiel werden die einzusetzenden Fette und Öle erwärmt, gemischt und dann zur Stabilisierung mit je 250 ppm Ascorbylpalmitat und alpha-Tocopherol versetzt.

## Fettmischungsbeispiel

2,0 % Leberfett (Rind, Schwein)

5,5 % Eieröl/Eilecithin

1,0 % Fischöl (desodoriert, entvitaminiert)

28,0 % Oleo Oil

4,5 % Maiskeimöl

6,0 % Sojaöl

38,0 % Palmöl, flüssig

15,0 % Kokos-/Palmkernfett

## Fettsäurezusammensetzung (in Gew.%)

| | | |
|---|---|---|
| Laurinsäure | C12 | 6,46 |
| Myristinsäure | C14 | 3,78 |
| Palmitinsäure | C16 | 25,6 |
| Stearinsäure | C18 | 8,42 |
| Ölsäure | C18:1w9 | 35,5 |
| Linolsäure | C18:2w6 | 12,7 |
| Linolensäure | C18:3w3 | 0,91 |
| Arachidonsäure | C20:4w6 | 0,39 |
| Docosahexaensäure | C22:6w3 | 0,15 |
| | | |
| P/S-Quotient | | 0,32 |
| C22:6w3/C20:4w6-Quotient | | 1 : 2,5 |
| | | |
| Cholesterin (mg/g Fett) | | 4,2 |
| (= 15 mg Cholesterin in 100 ml Flüssignahrung) | | |

Die erfindungsgemäße Fettmischung ist für die Herstellung einer Säuglings- und Frühgeborenennahrung geeignet. Die Erfindung betrifft somit auch die Verwendung der erfindungsgemäßen Fettmischung für die Zubereitung einer Säuglingsnahrung.

Die mit dieser Fettmischung herzustellende Säuglingsnahrung auf der Basis pflanzlichen oder tierischen Eiweißes liegt in Form eines sofort löslichen Pulvers oder einer Flüssigmilch vor. Das flüssige Produkt wird in üblicher Weise sterilisiert oder bei Ultrahochtempteratur (UHT) sterilisiert und aseptisch abgefüllt.

Die Substanzen, die hierbei eingesetzt werden, können beispielhaft folgende sein:
a) Demineralisiertes Molkenpulver
b) Milchzucker
c) Magermilch, flüssig (8,5 %)
d) Mineralsalze
e) Vitamine
f) erfindungsgemäße Fettmischung

Die folgenden Tabellen zeigen die typische Zusammensetzung einer flüssigen Säuglingsnahrung, die unter Verwendung der Fettmischung aus dem Beispiel hergestellt wurde.

4

## Tabelle I

| | |
|---|---|
| Wassergehalt | 87,4 % |
| Proteine | 1,5 % |
| Lipide | 3,6 % |
| Kohlenhydrate | 7,2 % |
| Mineralsalze | 0,26 % |
| Brennwert | 285 kJ/100 ml |
| Cholesterin | 15 mg/100 ml |

## Tabelle II    Fettsäurezusammensetzung (in Gew.%)

| | | |
|---|---|---|
| Laurinsäure | C12 | 6,46 |
| Myristinsäure | C14 | 3,78 |
| Palmitinsäure | C16 | 25,60 |
| Stearinsäure | C18 | 8,42 |
| Ölsäure | C18:1w9 | 35,50 |
| Linolsäure | C18:2w6 | 12,70 |
| Linolensäure | C18:3w3 | 0,91 |
| Arachidonsäure | C20:4w6 | 0,39 |
| Docosahexaensäure | C22:6w3 | 0,15 |

Tabelle III    Gehalt an Mineralsalzen (mg/100 ml)

| Natrium | 25 |
|---|---|
| Kalium | 50 |
| Calcium | 60 |
| Magnesium | 6 |
| Phosphor | 40 |
| Chlorid | 20 |

Tabelle IV    Vitamine (/100 ml)

| Vitamin A | 201 I.E. |
|---|---|
| Vitamin $B_1$ | 0,04 mg |
| Vitamin $B_2$ | 0,05 mg |
| Vitamin $B_6$ | 0,03 mg |
| Vitamin $B_{12}$ | 0,15 ug |
| Vitamin C | 5,97 mg |
| Vitamin $D_3$ | 40,2 I.E. |
| Vitamin E | 0,61 mg |
| Biotin | 1,12 ug |
| Ca-D-Pantothenat | 0,40 mg |
| Folsäure | 10,13 mg |
| Niacinamid | 0,40 mg |

Die Zusammensetzung der Standardauflösung (13 g Pulver/90 ml Wasser) des pulverförmigen Produktes ist die gleiche wie die des flüssigen Produktes.

EP 0 231 904 B1

Vergleich der Fettsäurezusammensetzung (in Gew.%) und
des Cholesteringehaltes (in mg/100 ml) von
herkömmlicher und neuer Formelnahrung

|  | herkömmlich | neu |
|---|---|---|
| C 12 | 5,2 | 4,7 |
| C 14 | 3,8 | 3,7 |
| C 16 | 28,1 | 28,5 |
| C 18 | 8,4 | 9,2 |
| C 18:1w9 | 33,2 | 36,5 |
| C 18:2w6 | 12,6 | 11,7 |
| C 18:3w3 | 0,77 | 0,63 |
| C 20:3w6 | ND | 0,04 |
| C 20:4w6 | ND | 0,23 |
| C 22:5w3 | ND | 0,05 |
| C 22:6w3 | ND | 0,08 |
| P/S-Quotient | 0,29 | 0,28 |
| C 22:6w3/C 20:4w6-Quotient | – | 0,35 |
| Cholesterin | 4,0 | 18,0 |

ND = nicht nachweisbar

## Ansprüche

1. Fettmischung für Säuglingsnahrungen, dadurch **gekennzeichnet**, daß sie die hoch ungesättigten Fettsäuren Arachidon- und Docosahexaensäure aus Fetten tierischen oder pflanzlichen Ursprungs in einem Verhältnis der Docosahexaen- zur Arachidonsäure von 1 : 2,0 bis 1 : 3,0 enthält, wobei der Gehalt an Arachidonsäure in der Fettmischung 0,12 bis 1,0 Gew.% und der an Docosahexaensäure 0,05 bis 0,5 Gew.% bei einem Gesamtgehalt an beiden Säuren von 0,17 bis 1,5 Gew.% beträgt.

2. Fettmischung gemäß Anspruch 1, dadurch **gekennzeichnet**, daß der Gehalt an Cholesterin aus Fetten tierischen oder pflanzlichen Ursprungs 3 bis 20 mg/g Fett beträgt.

3. Fettmischung gemäß Ansprüchen 1 und 2, dadurch **gekennzeichnet**, daß sie zusätzlich alpha-Tocopherol in einer Menge von 150 bis 300 ppm enthält.

4. Fettmischung gemäß einem der Ansprüche 1 bis 3, dadurch **gekennzeichnet**, daß sie zusätzlich Ascorbylpalmitat in einer Menge von 150 bis 300 ppm enthält.

7

5. Verfahren zur Herstellung der Fettmischung nach Anspruch 1, dadurch **gekennzeichnet,** daß man zu deren Herstellung Fischöle, Eieröl, Eilecithin, Fettfraktionen des Rinder- und Schweinehirns sowie Organfett (Niere, Leber) von Rindern oder Schweinen, Pflanzenöle dicotyler und monocotyler Pflanzen, Oleo Oil und/oder Algenöle, verwendet und dabei das Verhältnis der jeweiligen Öle bzw. Fette so abstimmt, daß das Verhältnis von Docosahexaen- zu Arachidonsäure 1 : 2,0 bis 1 : 3,0 beträgt.

6. Verwendung der Fettmischung gemäß Ansprüchen 1 bis 4 für die Zubereitung einer Säuglings- und Frühgeborenennahrung.

Patentansprüche für folgende Vertragsstaaten : GR, ES

1. Verfahren zur Herstellung einer Fettmischung für Säuglingsnahrungen, die die hochungesättigten Fettsäuren Arachidon- oder Docosahexaensäure aus Fetten tierischen und pflanzlichen Ursprungs in einem Verhältnis der Docosahexaen- zur Arachidonsäure von 1 : 2,0 bis 1 : 3,0 enthält, wobei der Gehalt an Arachidonsäure in der Fettmischung 0,12 bis 1,0 Gew.-% und der an Docosahexaensäure 0,05 bis 0,5 Gew.-% bei einem Gesamtgehalt an beiden Säuren von 0,17 bis 1,5 Gew.-% beträgt, dadurch gekennzeichnet, daß man zu deren Herstellung Fischöle, Eieröl, Eilecithin, Fettfraktionen des Rinder-und Schweinehirns sowie Organfett (Niere, Leber) von Rindern oder Schweinen, pflanzenöle dicotyler und monocotyler Pflanzen, Oleo Oil und/oder Algenöle, verwendet und dabei das Verhältnis der jeweiligen Öle bzw. Fette so abstimmt, daß das Verhältnis von Docosahexaen-zu Arachidonsäure 1 : 2,0 bis 1 : 3,0 beträgt.

2. Verfahren gemäß Anspruch 1, dadurch gekennzeichnet, daß der Gehalt an Cholesterin aus Fetten tierischen oder pflanzlichen Ursprungs 3 bis 20 mg/g Fett beträgt.

3. Verfahren gemäß Ansprüchen 1 und 2, dadurch gekennzeichnet, daß man zusätzlich alpha-Tocopherol in einer Menge von 150 bis 300 ppm zugibt.

4. Verfahren gemäß einem der Ansprüche 1 bis 3, dadurch gekennzeichnet, daß man zusätzlich Ascorbylpalmitat in einer Menge von 150 bis 300 ppm zugibt.

5. Verwendung der Fettmischung gemäß Ansprüchen 1 bis 4 für die Zubereitung einer Säuglings- und Frühgeborenennahrung.


## Claims

1. Fat mixture for infant feeds, characterised in that it contains the highly unsaturated fatty acids arachidonic and docosahexaenoic acids from fats of animal or vegetable origin in a ratio of docosahexaenoic to arachidonic acid of 1:2.0 to 1:3.0, wherein the content of arachidonic acid in the fat mixture is 0.12 to 1.0 wt.% and that of docosahexaenoic acid 0.05 to 0.5 wt.%, with a total content of both acids of 0.17 to 1.5 wt.%.

2. Fat mixture according to claim 1, characterised in that the content of cholesterol from fats of animal or vegetable origin is 3 to 20 mg/g fat.

3. Fat mixture according to claims 1 and 2, characterised in that in addition it contains alpha-tocopherol in a quantity of 150 to 300 ppm.

4. Fat mixture according to any of claims 1 to 3, characterised in that in addition it contains ascorbyl palmitate in a quantity of 150 to 300 ppm.

5. Method for the preparation of the fat mixture according to claim 1, characterised in that fish oils, egg oil, egg lecithin, fat fractions of cows' and pigs' brains and organ fat (kidney, liver) of cows or pigs, plant oils of dicotyledonous and monocotyledonous plants, oleo oil and/or alga oils are used for the preparation thereof and in the process the ratio of the respective oils and fats is adjusted in such a way that the ratio of docosahexaenoic to arachidonic acid is 1:2.0 to 1:3.0.

6. Use of the fat mixture according to claims 1 to 4 for the preparation of an infant and premature baby feed.

Claims for the following Contracting States : GR, ES

1. Method for the preparation of a fat mixture for infant feeds which contains the highly unsaturated fatty acids arachidonic or docosahexaenoic acid from fats of animal and vegetable origin in a ratio of docosahexaenoic to arachidonic acid of 1:2.0 to 1:3.0, wherein the content of arachidonic acid in the fat mixture is 0.12 to 1.0 wt.% and that of docosahexaenoic acid 0.05 to 0.5 wt.%, with a total content of both acids of 0.17 to 1.5 wt.%, characterised in that fish oils, egg oil, egg lecithin, fat fractions of cows' and pigs' brains and organ fat (kidney, liver) of cows or pigs, plant oils of dicotyledonous and monocotyledonous plants, oleo oil and/or alga oils are used for the preparation thereof and in the process the ratio of the respective oils and fats is adjusted in such a way that the ratio of docosahexaenoic to arachidonic acid is 1:2.0 to 1:3.0.

2. Method according to claim 1, characterised in that the content of cholesterol from fats of animal or vegetable origin is 3 to 20 mg/g fat.

3. Method according to claims 1 and 2, characterised in that in addition alpha-tocopherol is added in a quantity of 150 to 300 ppm.

4. Method according to any of claims 1 to 3, characterised in that in addition ascorbyl palmitate is added in a quantity of 150 to 300 ppm.

5. Use of the fat mixture according to claims 1 to 4 for the preparation of an infant and premature baby feed.

**Revendications**

1. Mélange de corps gras pour aliments pour bébés, caractérisé en ce qu'il contient les acides gras fortement insaturés acide arachidonique et acide docosahexénoïque provenant de graisses d'origine animale ou végétale pour un rapport de l'acide docohexanoïque à l'acide arachidonique de 1 : 2,0 à 1 : 3,0, la teneur de l'acide arachidonique dans le mélange de corps gras étant comprise entre 0,12 et 1,0% en poids et celle de l'acide docosahexénoïque entre 0,05 et 0,5% en poids, pour une teneur totale des deux acides comprise entre 0,17 et 1,5% en poids.

2. Mélange de corps gras selon la revendication 1, caractérisé en ce que la teneur en cholestérol provenant de graisses d'origine animale ou végétale est comprise entre 3 et 20 mg/g de corps gras.

3. Mélange de corps gras selon les revendications 1 et 2, caractérisé en ce qu'il contient additionnellement de l'α-tocophérol en une quantité comprise entre 150 et 300 ppm.

4. Mélange de corps gras selon l'une des revendications 1 à 3, caractérisé en ce qu'il contient additionnellement du palmitate d'ascorbyle en une quantité comprise entre 150 et 300 ppm.

5. Procédé de fabrication du mélange de corps gras selon la revendication 1, caractérisé en ce que l'on utilise pour sa préparation des huiles de poissons, de l'huile de jaune d'oeuf, de la lécithine d'oeuf, des fractions lipidiques de matière cérébrale de boeuf et de porc ainsi que des matières grasses organiques (reins, foies) de boeuf ou de porc, des huiles de dicotylédones et de monocotylédones, de l'Oleo Oil et/ou des huiles d'algues et que l'on définit le rapport des différentes huiles et matières grasses de façon telle que le rapport de l'acide docosahexénoïque à l'acide arachidonique est compris entre 1 : 2,0 et 1 : 3,0.

6. Emploi du mélange de corps gras selon les revendications 1 à 4, pour la préparation d'un aliment pour bébés et prématurés.

Revendications pour les Etats contractants suivants : GR, ES

1. Procédé de préparation d'un mélange de corps gras pour aliments pour bébés contenant les acides gras fortement insaturés acide arachidonique ou acide docosahexénoïque provenant de graisses d'origine animale ou végétale pour un rapport de l'acide docosahexénoïque à l'acide arachidonique compris entre 1 : 2,0 et 1 : 3,0, la teneur de l'acide arachidonique dans le mélange de corps gras étant comprise entre 0,12 et 1,0% en poids et celle de l'acide docosahexénoïque entre 0,05 et 0,5% en poids pour une teneur totale des deux acides comprise entre 0,17 et 1,5% en poids, caractérisé en ce qu'on utilise pour sa préparation des huiles de poissons, de l'huile de jaune d'oeuf, de la lécithine d'oeuf, des fractions lipidiques de matière cérébrale de boeuf et de porc ainsi que des matières grasses organiques (reins, foies) de boeuf ou de porc, des huiles de dicotylédones et de monocotylédones, de l'Oleo Oil et/ou des huiles d'algues et que l'on définit le rapport des différentes huiles et corps gras de façon telle que le rapport de l'acide docosahexénoïque à l'acide arachidonique est compris entre 1 : 2,0 et 1 : 3,0.

2. Procédé selon la revendication 1, caractérisé en ce que la teneur en cholestérol provenant de graisses d'origine animale ou végétale est comprise entre 3 et 20 mg/g de corps gras.

3. Procédé selon les revendications 1 et 2, caractérisé en ce que l'on ajoute additionnellement de l'α-tocophérol en une quantité comprise entre 150 et 300 ppm.

4. Procédé selon l'une des revendications 1 à 3, caractérisé en ce que l'on ajoute additionnellement du palmitate d'ascorbyle en une quantité comprise entre 150 et 300 ppm.

5. Emploi du mélange de corps gras selon les revendications 1 à 4 pour la préparation d'un aliment pour bébés et prématurés.